# EUROPEAN PATENT SPECIFICATION

(11) **EP 1 388 265 B1**
(45) Date of publication and mention of the grant of the patent: **24.07.2013**
(21) Application number: 02758195.8
(22) Date of filing: 14.05.2002
(51) Int. Cl.: H04W 28/14

(54) **METHOD FOR PROTECTING AGAINST OVERLOAD OF A PACKET SWITCHING NETWORK NODE OF A COMMUNICATION NETWORK**
VERFAHREN ZUM SCHUTZ GEGEN ÜBERLAST EINES PAKETVERMITTLUNGSNETZKNOTENS EINES KOMMUNIKATIONSNETZES
PROCEDE DE PROTECTION CONTRE UNE SURCHARGE D'UN NOEUD DE RESEAU DE COMMUTATION PAR PAQUETS D'UN RESEAU DE COMMUNICATION

(30) Priority: 14.05.2001 EP 01111656; 14.05.2001 EP 01111663
(43) Date of publication of application: 11.02.2004
(73) Proprietor: Telefonaktiebolaget L M Ericsson (publ), 164 83 Stockholm (SE)
(72) Inventor: WASSEW, Alexander, 31134 Hildesheim (DE); BOLLMANN, Maik, 32602 Vlotho (DE)
(74) Representative: Kribber, Klaus-Dieter
(86) International application number: PCT/EP2002/005308
(87) International publication number: WO 2003/003753

(56) References cited:
- DE-C- 19 907 085
- US-A- 5 742 588

## Description

The invention addresses the field of mobile telecommunications. The invention relates to a method for protecting against overload of a packet switching network node of a communication network. Furthermore, the invention relates to a network node element of a communication network and to a communication network. Finally, the invention relates to a computer program for a network node element of a communication network.

The above stated method, network node element, communication network and computer program are known from a communication network conforming to the Packet Personal Digital Cellular (PPDC) standard (sometimes called Packet Pacific Digital Cellular standard), also called RCR STD 27 standard, current release version I. A system according to the PPDC standard is usually an extension of a mobile telephone system for circuit switched communication. The additional service enables end-users to access specific internet-like content offered on an application server of a content provider using a packet data mobile station as a connecting device. Data transfer from the application server to the mobile station can be based on the internet protocol.

A known Packet Personal Digital Cellular system comprises at least one packet switching network node called packet mobile services switching center (PMSC). The packet mobile services switching center handles a packet data switching functionality between the application server and the mobile station. The packet mobile services switching center assigns an internet protocol address to the mobile station requesting a registration for an end-to-end packet data session to the application server and routes and forwards incoming and outgoing internet protocol packets addressed to/from the registered mobile station. Functions provided by the packet mobile services switching center include registration and deregistration of the mobile station, authentication of mobile users, control of channel reselection procedures, and update of routing information.

The node comprises CPU boards (PowerPC based interface board), to run a real time operating system, i.e. without virtual memory, and telecommunication related software. The CPU boards handle signaling functionality and user traffic, i.e., routing of payload. Users file requests for processing to the node in input queues.

The packet mobile services switching center is exposed to at least two types of load: control signaling such as registrations/deregistrations and user data packets (internet protocol packets). The capacity of the node to process the requests is limited by the given hardware such as CPU, memory and the size of the input queues where all received requests are filed. Each load type files its requests in separate input queues. Both or any single load type can cause overload of the node. Overload can occur in case the node's load exceeds the node's limited resources' capacity to handle load during a given time period such that the node fails to function. In particular, overload can have two different adverse effects: crash of the node due to lack of memory, or congested queues where time critical requests cannot be fulfilled.

The packet mobile services switching center must be protected against dynamic overload to guarantee in-service performance to the users. Dynamic overload is generated by too many requests to the system on a per time base, i.e., the number of requests cannot be handled during a provided time period. This may result in a decreased service to the customer or a loss of service at all.

A wide-spread method to protect telecommunication systems against dynamic overload is to control the traffic rate by attenuating bursts of input requests. A common solution is the so-called gaping method. The gaping method restricts the amount of traffic so that the system has to cope with at most a defined number of requests per time. A gaping gate stores the departure time of the last accepted request (see e.g. US patent 4,224,479) or a time gap calculated from several, previously accepted requests (see e.g. WO publication 96/19070). If the next request arrives in a time smaller than the stored time gap it is rejected, otherwise it is served. If the request is accepted the time gap has to be updated.

There are several problems with the existing technology. One point is the limitation of the incoming request flow to a fixed value. This value has to be safe, i.e., it has to be adapted to the worst case. Such a worst case may be reached when the system has not only to handle the user traffic but also has to handle some operation and/or maintenance tasks. The prior art procedure slows down the traffic flow irrespective of a possible availability of resources that the worst case scenario considers used for operation and/or maintenance tasks.

Another problem is a concentration of the overload protection to one gate. Thus it is difficult to distinguish different overload situations that ought to be handled in different ways.

Furthermore, as, at the gaping gate, each input request is handled separately, a high overhead in terms of additional CPU load is produced.

Moreover, new values for the parameters must be determined each time the hardware is changed. For example, a faster CPU may allow a shorter time gap between incoming requests. However, this new time gap must first be calculated. Thus, the maintainability is cumbersome and (CPU-)time consuming.

US 5742588 shows a method and system of packet switched traffic management in a cellular telecommunications system. There is a packet switched radio channel (PRCH) manager for each cell of the cellular system and a PRCH controller for each PRCH in the cell. The PRCH manager evaluates service requests, handles a PRCH admission queue and manages the active PRCHs of the cell. The PRCH controllers supervise ongoing traffic, control admission and control traffic congestion for each individual PRCH. A system operator can set a maximum tolerable delay for each PRCH and a priority for each packet call, thereby reducing the probability of an unacceptable packet transmission delay for a PRCH user.

The problem underlying the present invention is to provide a dynamic overload protection for the packet switched network node that allows to use the network node's resources with better efficiency.

This object is solved by the teaching of the independent claims.

Further preferred embodiments are given in the dependent claims.

According to a first aspect of the invention, a method for protecting against overload of a packet switching network node of a communication network is provided, the packet switching network node being provided with resources for processing of requests and with an overload protection task for protection of the resources from overload, the resources comprising at least one input queue for requests to be processed, a processor for request processing and a memory for storing data related to request processing, the resources for processing being limited, wherein said network node, in particular said overload protection task, performs the steps of:
- monitoring a load status of said resources,
- detecting, by means of the load status, any overload situation arising at the monitored resources, and
- determining, in the case of a detected overload situation, dependent on predetermined rules, an overload dissolving measure.

The processor is, e.g., provided as a central processing unit. The memory is, e.g., provided as a random access memory unit. Data related to request processing may be data that need to be stored temporarily during processing. "Load" is defined in relation to node resources. Load is constituted by anything, for example a registration request or a deregistration request, whose handling on input to the node involves one or more node resources. For example, control signaling may require processing of a control signal; this processing is conducted by the central processing unit of the node. Thus, a node resource is used. For another example, processing of user data requests may require temporary storage; this storage is conducted in the memory unit of the node. Thereby, another node resource is used. The input queue is filled with processing requests and thus comprises load that is due for handling by the node. The input queue may be provided, for example, as a list comprising entries of control signaling requests and/or user data requests that await processing and/or storing. Monitoring the load status of the resources comprises monitoring the fill level of the input queue. For a given network node comprising a given hardware, the network node's capacity to process said control signaling requests and/or user data requests is limited.

The invention is advantageous, because using the inventive method, the packet switching network node remains stable and reliable though it may run at its limits. Thus the node keeps a determined quality of service (QoS). The overload protection is triggered if a lack of system resources occurs. By adapting to the resource situation during runtime, the inventive overload protection enables an optimum use of system resources. As availability of the resources may change not only due to incoming requests but also due to other activities such as intermediate storage of charging data or operation and maintenance. By monitoring of all critical resources, it is possible to select appropriate actions in order to avert an imminent overload situation.

According to a preferred embodiment of the invention, the overload protection task is run cyclically. It has a very high priority such that it is prioritized over at least most other tasks. In every cycle, the overload protection task monitors the load status of the node resources and thus checks whether an overload situation occurs. The overload protection task detects the occurance of a critical load situation if, regarding the load status of the monitored node resource, a defined rule is violated. Preferably, the rule is defined prior to running the overload protection task, e.g., already at system start up. In one embodiment, the overload protection task is helped by at least one supervision task that enjoys a high priority. The supervision task may be provided as a subroutine comprised within the overload protection task. In one embodiment, overload task and supervision task enjoy equally high priority. In one embodiment, the overload task and/or the supervision task are provided as overload RTOS-tasks, where RTOS stands for Real Time Operating System.

In one embodiment, the resources comprise at least a second input queue for requests to be processed, the first input queue being dedicated to receiving control signaling requests such as registration/deregistration requests and the second input queue being dedicated to receiving user data requests, the user data requests being provided as user data packets, in particular user data internet protocol packets. This embodiment allows to separately monitor the load status with respect to incoming control signaling requests and with respect to incoming user data requests.

In one embodiment, the step of detecting an overload situation comprises detecting whether memory consumption exceeds a predetermined first threshold (hereafter also referred to as rule RA). Thus, an overload dissolving measure can be determined in case of memory shortage. In one embodiment, the step of detecting an overload situation comprises detecting whether memory consumption exceeds a predetermined second threshold (hereafter also referred to as rule RB), the second threshold being superior to the first threshold. This embodiment enables to determine a second overload dissolving measure that, e.g., may be more effective than the first overload dissolving measure, in case of the memory shortage having grown worse.

In one embodiment, the step of detecting an overload situation comprises detecting whether the processor load exceeds a predetermined processor load limit (hereafter also referred to as rule RC). This embodiment allows to determine an overload dissolving measure that is specifically adapted to deal with processor overload. In one embodiment, the overload situation is detected if the processor load exceeds a certain limit for a certain interval of time, measured, e.g., by counting ticks of a processor clock for several ticks.

In one embodiment, the step of detecting an overload situation comprises detecting whether the fill level of the input queue exceeds a predetermined fill level. Preferably, the step of detecting an overload situation comprises detecting whether the fill level of control signaling requests in the first input queue exceeds a predetermined control signaling request fill level (hereafter also referred to as rule RD). This embodiment allows to determine an overload dissolving measure that is specifically adapted to deal with overload due to control signaling requests. Particularly preferably, the step of detecting the overload situation comprises detecting whether the fill level of user data requests in the second input queue exceeds a predetermined user data request fill level (hereafter also referred to as rule RE). This embodiment allows to determine an overload dissolving measure that is specifically adapted to deal with overload due to user data requests. Thus, depending on the cause of the detected overload situation (control signaling requests or user data requests), a suitable measure to dissolve the detected overload can be determined.

In one embodiment, if the memory consumption exceeds the predetermined first threshold (Rule RA), the determined overload dissolving measure comprises rejecting a predetermined ratio of control signaling requests received in the first input queue (hereafter also referred to as measure MA) and dropping the user data requests, i.e., the internet protocol packets from the second input queue (hereafter also referred to as measure MC). Thereby, the number of new registration requests that are processed is restricted in accordance with the predetermined ratio of user requests. For example, measure MA may be defined to drop twenty per cent of the new requests received in the first input queue; thus, when executed, on average, every fifth new request is dropped, i.e., only four out of five requests are queued for processing, and thus the overload is dissolved.

In one embodiment, if the memory consumption exceeds the predetermined second threshold (RB), the determined overload dissolving measure comprises rejecting all control signaling requests received in said first input queue (hereafter referred to as measure MB) and dropping all user data requests, i.e., all internet protocol packets from the second input queue (hereafter referred to as measure MD). Thus, one hundred per cent of the new requests are dropped. In one embodiment, the input queue is flushed, i.e., all queued request are removed from the queue. Preferably, at least the second input queue is flushed such that all queued user data requests are removed from this queue. Flushing the second input queue results in a particularly effective relief from overload.

In one embodiment, if the processor load exceeds the predetermined processor load limit (RC), the determined overload dissolving measure comprises rejecting the predetermined ratio of control signaling requests received in the first input queue (MA) and dropping the user data requests, i.e., the internet protocol packets from the second input queue (MC). In one embodiment, the measures MA and MC are determined only if the processor load exceeds the predetermined processor load limit for a certain interval of time, measured, e.g., by counting ticks of the processor clock for several ticks.

In one embodiment, if the fill level of control signaling requests in the first input queue exceeds the predetermined control signaling request fill level (rule RD), the determined overload dissolving measure comprises rejecting a predetermined ratio of control signaling requests received in the first input queue (measure MA).

In one embodiment, if the fill level of user data requests in the second input queue exceeds the predetermined user data request fill level (rule RE), said determined overload dissolving measure comprises dropping of user data requests, i.e., internet protocol packets from said second input queue (measure MC). Preferably, the determined measure requires the second input queue to be flushed.

Preferably, the inventive overload protection method comprises the step of dissolving the detected overload situation by execution of the determined at least one overload dissolving measure. In one embodiment, execution of the determined overload dissolving measure is suspended if the determined overload situation is dissolved.

According to a second aspect of the invention, a network node element of a communication network is provided, the network node element being provided with resources for processing of requests and with an overload protection task for protection of the resources from overload, the resources comprising at least one input queue for requests to be processed, a processor for request processing and a memory for storing data related to request processing, wherein the network node's capacity for processing is limited. Preferably, the network node element is adapted to perform the inventive method for protecting against overload of a packet switching network node (PMSC). Thus, particularly the packet switching network node that the network node element belongs to can be protected. However, the network node element may also be provided for a mobile switching center (MSC) in general, a base station (BS), a base station controller (BSC), a radio network controller (RNC), a serving GPRS (General Packet Radio Service) support node (SGSN) etc. In one embodiment, the network node element comprises a request handling means for controlling the input queue.

According to a third aspect of the invention, a communication network is provided that comprises at least one inventive network node element. The communication network can be more stable and reliable than known communication networks since the packet switching network node comprising the inventive network node element remains stable and reliable though it may run at its limits. Thus the node keeps a determined quality of service (QoS) and the overall quality of service of the network is optimized. Preferably, all network node elements of the communication network are provided according to the invention such that the overall quality of service of the network is maximized. For example, the mobile communication network is provided as a Personal Digital Cellular (PDC) network or as a Packet Personal Digital Cellular (Packet PDC) network. In one embodiment , the communication network is provided such that it comprises at least one network node that is equipped with the inventive network node element.

According to a fourth aspect of the invention, a computer program is provided that is loadable into an internal memory of a digital processing unit and comprises software code portions adapted to control the steps according to the inventive method for protecting against overload of a packet switching network node, when the computer program is executed on the digital processing unit. Preferably, the computer program is stored on a machine-readable medium, in particular a computer-readable medium such as a compact disc read only memory (CD ROM), a floppy disc, an optical disc, or a hard disc. Thus a good physical portability of the control software is provided and upgrades can be performed in an easy way. The computer program is comprised in a machine-readable medium, in particular, in a computer readable medium.

The invention can be used preferably in all communication systems as defined by the Third Generation Partnership Project (3GPP) in the release of 1999 as well as in all future release thereof. In particular, this includes Personal Digital Cellular (PDC) and Packet Personal Digital Cellular (PPDC) as well as Universal Mobile Telecommunications System (UMTS) networks, core networks, Global Standard for Mobiles (GSM) networks, and the corresponding user equipment.

These and other aspects of the invention will be more fully understood by referring to the following detailed description and the accompanying drawings.
Fig. 1 is a schematic diagram illustrating one embodiment of the invention in which an overload protection task monitors a load status of several resources of a packet switching network node.
Fig. 2 is a table comprising rules for detecting overload and measures determined in response to each detected rule.

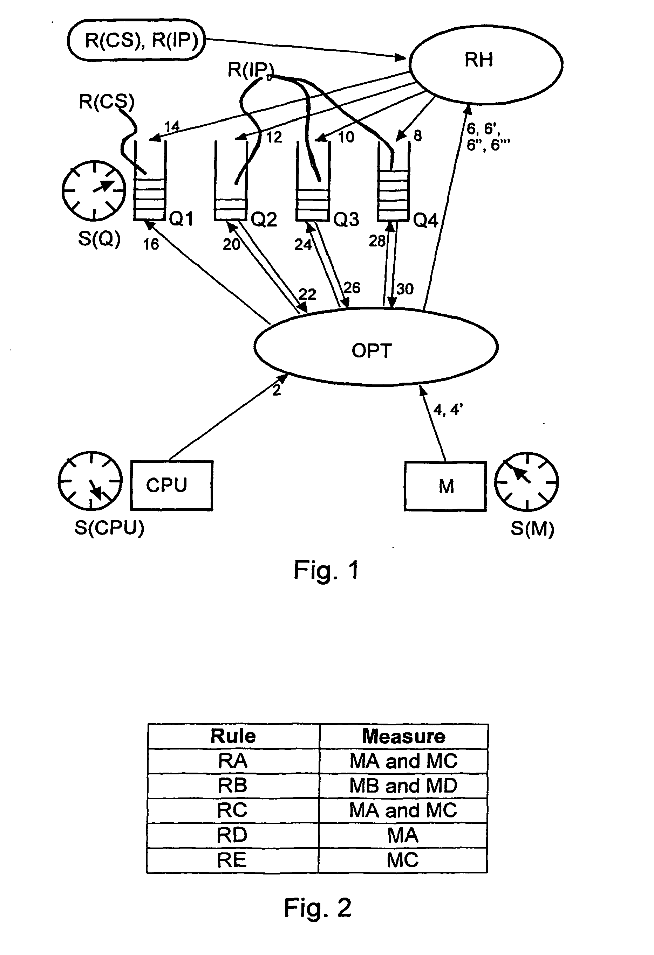

Fig. 1 schematically shows resources of a packet switching network node according to the invention and outlines the principle of the inventive overload protection. The packet switching network node (not shown) comprises at least the following resources: a central processing unit CPU, a memory unit M and four input queues Q1, ..., Q4 which collect incoming requests R. The node further comprises a request handler RH that deals with incoming requests R and distributes these requests R to the input queues Q1, ..., Q4 as indicated in fig. 1 by arrows 14, 12, 10 and 8, respectively. Different queues are for different incoming requests R. Queue Q1 receives control signalling requests R(CS) such as registration and deregistration requests. Queues Q2, Q3 and Q4 receive user data requests R(IP). The user data requests are provided as internet protocol packets IP.

Supervision tasks S(Q), S (CPU) and S(M) monitor the load status of the node resources, i.e., input queues Q1,..,Q4, control processing unit CPU, and memory unit M, respectively.

A central overload protection task OPT is run cyclically on the central processing unit CPU. The central overload protection task OPT comprises the supervision task S(Q) to monitor the fill levels of the input queues Q1, Q2, Q3 and Q4. This monitoring is indicated in fig. 1 by arrows 16, 20, 24 and 28, respectively. Furthermore, the supervision tasks S(CPU) and S(M) are run cyclically in the central processing unit CPU in order to monitor the load of the central processing unit CPU and the memory unit M and to detect an overload situation. Detection of the overload situation is accomplished in accordance with a set of predetermined rules RA, ..., RE. The rules are defined as follows:

| **Reference** | **Rule** |
|---|---|
| RA | Memory M is short, i.e., consumption of memory M exceeds a predetermined first threshold |
| RB | Memory M is very short, i.e., consumption of memory M exceeds a predetermined second threshold superior to the first threshold |
| RC | The processor CPU load exceeds the predetermined processor load limit for several ticks |
| RD | The fill level of control signaling requests R(CS) such as registration/deregistration requests in the input queue Q 1 exceeds a predetermined control signaling request fill level of N1 requests |
| RE | The fill level of user data requests provided as user data packets in the input queues Q2, Q3, Q4 exceeds a predetermined user data request fill level of N2 = N3 = N4 requests |

If any of the supervision tasks S(Q), S(CPU), S(M) detects an overload situation in one of the node resources Q1, ..., Q4, CPU, M, the detecting supervision task S(Q), S(CPU), and/or S(M) triggers the overload protection. The overload protection task possesses a set of measures MA, ..., MD to react against overload. Overload protection is achieved by determining measures MA, MB, MC and/or MD for dissolving the overload situation and by enforcing the determined measure. The measures MA, MB, MC, MD are defined as follows:

| **Reference** | **Measure** |
|---|---|
| MA | Reject a predetermined ratio of 20 % of control signaling requests R(CS) received for input queue Q1 |
| MB | Reject all control signaling requests R(CS) received for input queue Q1 |
| MC | Drop user data requests R(IP), i.e., internet protocol packets received in input queues Q2, Q3, Q4 |
| MD | Flush all user data requests R(IP), i.e., internet protocol packets from input queues Q2, Q3, Q4 |

Preferably, measures MA, MB, and MC are executed by the request handler RH, while measure MD is executed by the overload protection task itself.

Fig. 2 shows references to rules RA,..., RE for detecting an overload situation and measures MA, ..., MD determined in correspondence to the rule that gave rise to the detection of the overload situation. The overload protection task selects a certain measure MA, MC (or a combination of two measures MA and MC, MB and MD) depending on the rule RA, ..., RE that was violated.

In case the supervision task S(M) monitoring memory M detects memory shortage according to rule RA, i.e., memory consumption to exceed the first predetermined limit, a corresponding information 4 is provided to the overload protection task OPT. The overload protection task OPT reacts to this information 4 by sending a trigger 6 to the request handler RH to take measures MA and MC, i.e., to reject a predetermined ratio of control signaling requests R(CS) received in the input queue Q 1 (in the present example the ratio is 20 %, however, any ratio from 0 to 1 can be predetermined), and to drop new user data requests R(IP), i.e. internet protocol packets from the input queues Q2, Q3, Q4. Request handler RH dissolves the overload situation by executing the determined measures MA and MC.

If the supervision task S(M) monitoring memory M detects memory shortage according to rule RB, i.e., the memory consumption exceeding the second predetermined limit, the corresponding information 4' is provided to the overload protection task OPT. The overload protection task OPT reacts to this information 4' by sending a corresponding trigger 6' to the request handler RH to take measure MB. i.e., to reject all control signaling requests R(CS) received in the input queue Q1. The request handler RH dissolves the overload protection by executing the determined measure MB. Moreover, the overload protection task flushes input queues Q2, Q3, Q4 from all user data requests R(IP), i.e. from all internet protocol packets, as indicated in fig. 1 by arrows 22, 26, 30. Thus, the overload protection task itself dissolves the overload situation by executing the determined measure MD.

In case the supervision task S(CPU) monitoring the central processing unit CPU detects that the CPU load exceeds the predetermined processor load limit for several ticks according to rule RC, a corresponding information 2 is provided to the overload protection task OPT. The overload protection task OPT reacts to this information 4 by sending a trigger 6 to the request handler RH to take measures MA and MC, i.e., to reject a predetermined ratio of control signaling requests R(CS) received in the input queue Q1 (in the present example the ratio is 20 %, however, any ratio between 0 and 1 can be predetermined), and to drop new user data requests R(IP), i.e. internet protocol packets from the input queues Q2, Q3, Q4. Request handler RH dissolves the overload situation by executing the determined measures MA and MC.

If the supervision task S(Q), comprised in the overload protection task and monitoring the input queues Q1, ..., Q4, detects that the fill level of control signaling requests R(CS) such as registration/deregistration requests in the input queue Q1 exceeds the predetermined control signaling request fill level of N1 requests according to rule RD, the overload protection task OPT reacts to this information by sending a trigger 6" to the request handler RH to take measure MA, i.e., to reject a predetermined ratio of control signaling requests R(CS) received in the input queue Q1 (in the present example the ratio is 20 %, however, any ratio from 0 to 1 can be predetermined). The request handler RH dissolves the overload situation by executing the determined measure MA.

If the supervision task S(Q), comprised in the overload protection task and monitoring the input queues Q1, ..., Q4, detects that the fill level of user data requests R(IP), i.e., internet packet data in any of input queues Q2, Q3, and/or Q3 to exceed the predetermined control signaling request fill level of N2 = N3 = N4 requests according to rule RE, the overload protection task OPT reacts to this information by sending a trigger 6"' to the request handler RH to take measure MC, i.e., to drop new user data requests R(IP), i.e. internet protocol packets from the input queues Q2, Q3, Q4. The request handler RH dissolves the overload situation by executing the determined measure MC.

## Claims

1. Method for protecting against overload of a packet switching network node of a communication network, said packet switching network node being provided with resources for processing of requests and with an overload protection task (OPT) for protection of said resources from overload, said resources comprising at least one input queue (Q3, ..., Q4) for requests to be processed, a processor (CPU) for request processing and a memory (M) for storing data related to request processing, said resources for processing being limited, wherein said network node, in particular said overload protection task (OPT), performs the steps of:
- monitoring a load status of said resources,
- detecting, by means of the load status, any overload situation arising at the monitored resources,
**characterized in that** the step of detecting an overload situation comprises detecting whether a fill level of the input queue (Q1, ..., Q4) exceeds a predetermined fill level, and
further **characterized by** the step of:
- determining, in the case of a detected overload situation, dependent on predetermined rules, an overload dissolving measure, wherein, if the fill level of control signaling requests (R(CS)) in a first input queue (Q1) exceeds a predetermined control signaling request fill level, said determined overload dissolving measure comprises the step of:
- rejecting a predetermined ratio of control signaling requests (R(CS)) received in said first input queue (Q1).

2. Method according to the preceding claim,
wherein said resources comprise at least a second input queue (Q2, Q3, Q4) tor requests to be processed, the first input queue (Q1) being dedicated to receiving control signaling requests (R(CS)) and the second input queue (Q2, Q3, Q4) being dedicated to receiving user data requests (R(IP)), said user data requests (R(IP)) being provided as user data packets.

3. Method according to claims 1 or 2,
wherein the step of detecting an overload situation comprises detecting whether memory consumption exceeds a predetermined first threshold.

4. Method according to claim 3,
wherein the step of detecting an overload situation comprises detecting whether the memory consumption exceeds a pre- determined second threshold, the second threshold being superior to the first threshold.

5. Method according to any of the preceding claims,
wherein the step of detecting an overload situation comprises detecting whether a processor load exceeds a predetermined processor load limit.

6. Method according to any of claims 1 to 5,
wherein the step of detecting an overload situation comprises detecting whether the fill level of control signaling requests (R(CS)) in the first input queue (Q1) exceeds the predetermined control signaling request fill level.

7. Method according to any of claims 1 to 6,
wherein the step of detecting an overload situation comprises detecting whether a fill level of user data requests (R(IP)) in the second input queue (Q2, Q3, Q4) exceeds a predetermined user data request fill level.

8. Method according to any of claims 1, 3 to 7,
wherein, if memory consumption exceeds the predetermined first threshold, said determined overload dissolving measure comprises the steps of:
- rejecting a predetermined ratio of control signaling requests (R(CS)) received in said first input queue (Q3), and
- dropping said user data packets from said second input queue (Q2 , Q3, Q4) .

9. Method according to any of claims 1, 3 to 8,
wherein, if the memory consumption exceeds the predetermined second threshold, said determined overload dissolving measure comprises the steps of:
- rejecting all control signaling requests (R(CS)) received in said first input queue (Q1), and
- dropping all user data packets from said second input queue (Q2, Q3, Q4) .

10. Method according to any of claims 1, 3 to 9,
wherein, if the processor load exceeds the predetermined processor load limit, said determined overload dissolving measure comprises the steps of:
- rejecting a predetermined ratio of control signaling requests (R(CS)) received in said first input queue (Q1), and
- dropping said user data packets from said second input queue (Q2, Q3, Q4).

11. Method according to any of claims 1, 3 to 10,
wherein, if said fill level of user data requests (R(IP)) in the second input queue (Q2, Q3, Q4) exceeds the predetermined user data request fill level, said determined overload dissolving measure comprises the step of:
- dropping said user data packets from said second input queue (Q2, Q3, Q4) .

12. Method according to any of the preceding claims, comprising the step:
- dissolving the detected overload situation by executing the determined at least one overload dissolving measure.

13. Method according to claim 12,
wherein said overload dissolving measure is suspended if said determined overload situation is dissolved.

14. Network node element of a communication network, said network node element being provided with resources for processing of requests and with an overload protection task (OPT) for protection of said resources from overload, said resources comprising at least one input queue (Q1, ..., Q4) for requests to be processed, a processor (CPU) for request processing and a memory (M) for storing data related to request processing, wherein said network node's capacity for processing is limited, said network node element comprising means for performing the steps of the method according to any one of claims 1 to 13.

15. Network node element according to claim 14, said network node element further comprising a request handling means (RH) for controlling the input queue (Q1, ..., Q4).

16. Communication network comprising at least one network node element according to claim 14 or 15.

17. Computer program, loadable into an internal memory (M) of a digital processing unit (CPU), comprising software code portions adapted to control the steps according to any of the preceding method claims, when the computer program is executed on the digital processing unit (CPU).

18. Computer program according to claim 17, wherein the computer program is stored on a machine-readable medium, in particular a computer-readable medium.

## Patentansprüche

1. Verfahren zum Schutz gegen Überlast eines Paketvermittlungsnetzknotens eines Kommunikationsnetzes, wobei der Paketvermittlungsnetzknoten mit Betriebsmitteln zum Verarbeiten von Anforderungen und mit einer Überlastschutzfunktion (OPT) zum Schutz der Betriebsmittel vor Überlast versehen ist, wobei die Betriebsmittel mindestens eine Eingangswarteschlange (Q1, ..., Q4) für zu verarbeitende Anforderungen, einen Prozessor (CPU) zur Anforderungsverarbeitung und einen Speicher (M) zum Speichern von Daten, die im Zusammenhang mit einer Anforderungsverarbeitung stehen, umfassen, wobei die Betriebsmittel zur Verarbeitung begrenzt sind, wobei der Netzknoten, insbesondere die Überlastschutzfunktion (OPT), die Schritte ausführt:
- Überwachen eines Laststatus der Betriebsmittel,
- Erkennen, anhand des Laststatus, jeglicher Überlastsituation, die an den überwachten Betriebsmitteln entsteht,
**dadurch gekennzeichnet, dass** der Schritt des Erkennens einer Überlastsituation ein Erkennen umfasst, ob ein Füllstand der Eingangswarteschlange (Q1, ..., Q4) einen vorbestimmten Füllstand überschreitet, und ferner **gekennzeichnet durch** den Schritt:
- Bestimmen im Falle einer erkannten Überlastsituation in Abhängigkeit von vorbestimmten Regeln einer Überlastlösungsmaßnahme, wobei, wenn der Füllstand von Steuersignalisierungsanforderungen (R(CS) in einer ersten Eingangswarteschlange (Q1) einen vorbestimmten Füllstand für Steuersignalisierungsanforderungen überschreitet, die bestimmte Überlastlösungsmaßnahme den Schritt umfasst:
- Zurückweisen eines vorbestimmten Anteils von Steuersignalisierungsanforderungen (R(CS)), die in der ersten Eingangswarteschlange (Q1) empfangen werden.

2. Verfahren nach dem vorhergehenden Anspruch,
wobei die Betriebsmittel mindestens eine zweite Eingangswarteschlange (Q2, Q3, Q4) für zu verarbeitende Anforderungen umfassen, wobei die erste Eingangswarteschlange (Q1) einem Empfang von Steuersignalisierungsanforderungen (R(CS) gewidmet ist, und die zweite Eingangswarteschlange (Q2, Q3, Q4) einem Empfang von Benutzerdatenanforderungen (R(IP)) gewidmet ist, wobei die Benutzerdatenanforderungen (R(IP)) als Benutzerdatenpakete bereitgestellt werden.

3. Verfahren nach den Ansprüchen 1 oder 2,
wobei der Schritt des Erkennens einer Überlastsituation ein Erkennen umfasst, ob eine Speichernutzung eine vorbestimmte erste Schwelle überschreitet.

4. Verfahren nach Anspruch 3,
wobei der Schritt des Erkennens einer Überlastsituation ein Erkennen umfasst, ob die Speichernutzung eine vorbestimmte zweite Schwelle überschreitet, wobei die zweite Schwelle höher als die erste Schwelle ist.

5. Verfahren nach einem der vorhergehenden Ansprüche,
wobei der Schritt des Erkennens einer Überlastsituation ein Erkennen umfasst, ob eine Prozessorlast eine vorbestimmte Prozessorlastgrenze überschreitet.

6. Verfahren nach einem der Ansprüche 1 bis 5,
wobei der Schritt des Erkennens einer Überlastsituation ein Erkennen umfasst, ob der Füllstand von Steuersignalisierungsanforderungen (R(CS)) in der ersten Eingangswarteschlange (Q1) den vorbestimmten Füllstand für Steuersignalisierungsanforderungen überschreitet.

7. Verfahren nach einem der Ansprüche 1 bis 6,
wobei der Schritt des Erkennens einer Überlastsituation ein Erkennen umfasst, ob ein Füllstand von Benutzerdatenanforderungen (R(IP)) in der zweiten Eingangswarteschlange (Q2, Q3, Q4) einen vorbestimmten Füllstand für Benutzerdatenanforderungen überschreitet.

8. Verfahren nach einem der Ansprüche 1, 3 bis 7,
wobei, wenn die Speichernutzung die vorbestimmte erste Schwelle überschreitet, die bestimmte Überlastlösungsmaßnahme die Schritte umfasst:
- Zurückweisen eines vorbestimmten Anteils von Steuersignalisierungsanforderungen (R(CS)), die in der ersten Eingangswarteschlange (Q1) empfangen werden, und
- Verwerfen der Benutzerdatenpakete aus der zweiten Eingangswarteschlange (Q2, Q3, Q4).

9. Verfahren nach einem der Ansprüche 1, 3 bis 8,
wobei, wenn die Speichernutzung die vorbestimmte zweite Schwelle überschreitet, die bestimmte Überlastlösungsmaßnahme die Schritte umfasst:
- Zurückweisen aller Steuersignalisierungsanforderungen (R(CS)), die in der ersten Eingangswarteschlange (Q1) empfangen werden, und
- Verwerfen aller Benutzerdatenpakete aus der zweiten Eingangswarteschlange (Q2, Q3, Q4).

10. Verfahren nach einem der Ansprüche 1, 3 bis 9,
wobei, wenn die Prozessorlast die vorbestimmte Prozessorlastgrenze überschreitet, die bestimmte Überlastlösungsmaßnahme die Schritte umfasst:
- Zurückweisen eines vorbestimmten Anteils von Steuersignalisierungsanforderungen (R(CS)), die in der ersten Eingangswarteschlange (Q1) empfangen werden, und
- Verwerfen der Benutzerdatenpakete aus der zweiten Eingangswarteschlange (Q2, Q3, Q4).

11. Verfahren nach einem der Ansprüche 1, 3 bis 10,
wobei, wenn der Füllstand von Benutzerdatenanforderungen (R(IP)) in der zweiten Eingangswarteschlange (Q2, Q3, Q4) den vorbestimmten Füllstand für Benutzerdatenanforderungen überschreitet, die bestimmte Überlastlösungsmaßnahme den Schritt umfasst:
- Verwerfen der Benutzerdatenpakete aus der zweiten Eingangswarteschlange (Q2, Q3, Q4).

12. Verfahren nach einem der vorhergehenden Ansprüche, umfassend den Schritt:
- Lösen der erkannten Überlastsituation durch Ausführen der bestimmten mindestens einen Überlastlösungsmaßnahme.

13. Verfahren nach Anspruch 12,
wobei die Überlastlösungsmaßnahme unterbrochen wird, wenn die bestimmte Überlastsituation gelöst ist.

14. Netzknotenelement eines Kommunikationsnetzes, wobei das Netzknotenelement mit Betriebsmitteln zum Verarbeiten von Anforderungen und mit einer Überlastschutzfunktion (OPT) zum Schutz der Betriebsmittel vor Überlast versehen ist, wobei die Betriebsmittel mindestens eine Eingangswarteschlange (Q1, ..., Q4) für zu verarbeitende Anforderungen, einen Prozessor (CPU) zur Anforderungsverarbeitung und einen Speicher (M) zum Speichern von Daten, die im Zusammenhang mit einer Anforderungsverarbeitung stehen, umfassen, wobei die Verarbeitungskapazität des Netzknotens begrenzt ist, wobei das Netzknotenelement Mittel zum Ausführen der Schritte des Verfahrens nach einem der Ansprüche 1 bis 13 umfasst.

15. Netzkontenelement nach Anspruch 14, wobei das Netzknotenelement ferner ein Anforderungsabwicklungsmittel (RH) zum Steuern der Eingangswarteschlange (Q1, ..., Q4) umfasst.

16. Kommunikationsnetz, umfassend mindestens ein Netzknotenelement nach Anspruch 14 oder 15.

17. Computerprogramm, das in einen internen Speicher (M) einer digitalen Verarbeitungseinheit (CPU) geladen werden kann und Softwarecodeabschnitte umfasst, die so ausgelegt sind, dass sie die Schritte nach einem der vorhergehenden Verfahrensansprüche steuern, wenn das Computerprogramm auf der digitalen Verarbeitungseinheit (CPU) ausgeführt wird.

18. Computerprogramm nach Anspruch 17, wobei das Computerprogramm auf einem maschinenlesbaren Medium, insbesondere einem computerlesbaren Medium, gespeichert ist.

## Revendications

1. Procédé de protection contre une surcharge d'un noeud de réseau de commutation par paquets d'un réseau de communication, ledit noeud de réseau de commutation par paquets étant pourvu de ressources pour traiter des demandes et d'une tâche de protection contre une surcharge (OPT) afin de protéger lesdites ressources contre une surcharge, lesdites ressources comprenant au moins une file d'attente d'entrée (Q1, ..., Q4) pour les demandes à traiter, un processeur (CPU) pour traiter les demandes et une mémoire (M) pour mémoriser les données relatives au traitement des demandes, lesdites ressources de traitement étant limitées, dans lequel ledit noeud de réseau, en particulier ladite tâche de protection contre une surcharge (OPT), effectue les étapes consistant à :
- surveiller un statut de charge desdites ressources,
- détecter, au moyen du statut de charge, une situation de surcharge survenant au niveau des ressources surveillées,
**caractérisé en ce que** l'étape de détection d'une situation de surcharge comprend de détecter si un niveau de remplissage de la file d'attente d'entrée (Q1, ..., Q4) excède un niveau de remplissage prédéterminé, et
**caractérisé en outre par** l'étape consistant à :
- déterminer, dans le cas d'une situation de surcharge détectée, dépendant de règles prédéterminées, une mesure de dissolution de surcharge, dans lequel, si le niveau de remplissage des demandes de signalisation de commande (R(CS)) dans une première file d'attente d'entrée (Q1) excède un niveau de remplissage de demande de signalisation de commande prédéterminé, ladite mesure de dissolution de surcharge déterminée comprend l'étape consistant à :
- rejeter un rapport prédéterminé de demandes de signalisation de commande (R(CS)) reçues dans ladite première file d'attente d'entrée (Q1).

2. Procédé selon la revendication précédente,
dans lequel lesdites ressources comprennent au moins une seconde file d'attente d'entrée (Q2, Q3, Q4) pour les demandes à traiter, la première file d'attente d'entrée (Q1) étant dédiée à la réception de demandes de signalisation de commande (R(CS)) et la seconde file d'attente d'entrée (Q2, Q3, Q4) étant dédiée à la réception de demandes de données d'utilisateur (R(IP)), lesdites demandes de données d'utilisateur (R(IP)) étant fournies comme des paquets de données d'utilisateur.

3. Procédé selon les revendications 1 ou 2,
dans lequel l'étape de détection d'une situation de surcharge comprend de détecter si une consommation de mémoire excède un premier seuil prédéterminé.

4. Procédé selon la revendication 3,
dans lequel l'étape de détection d'une situation de surcharge comprend de détecter si la consommation de mémoire excède un second seuil prédéterminé, le second seuil étant supérieur au premier seuil.

5. Procédé selon une quelconque des revendications précédentes,
dans lequel l'étape de détection d'une situation de surcharge comprend de détecter si une charge de processeur excède une limite de charge de processeur prédéterminée.

6. Procédé selon une quelconque des revendications 1 à 5,
dans lequel l'étape de détection d'une situation de surcharge comprend de détecter si le niveau de remplissage des demandes de signalisation de commande (R(CS)) dans la première file d'attente d'entrée (Q1) excède le niveau de remplissage de demande de signalisation de commande prédéterminé.

7. Procédé selon une quelconque des revendications 1 à 6,
dans lequel l'étape de détection d'une situation de surcharge comprend de détecter si un niveau de remplissage des demandes de données d'utilisateur (R(IP)) dans la seconde file d'attente d'entrée (Q2, Q3, Q4) excède un niveau de remplissage de demande de données d'utilisateur prédéterminé.

8. Procédé selon une quelconque des revendications 1, 3 à 7,
dans lequel, si la consommation de mémoire excède le premier seuil prédéterminé, ladite mesure de dissolution de surcharge déterminée comprend les étapes consistant à :
- rejeter un rapport prédéterminé de demandes de signalisation de commande (R(CS)) reçues dans ladite première file d'attente d'entrée (Q1), et
- abandonner lesdits paquets de données d'utilisateur de ladite seconde file d'attente d'entrée (Q2, Q3, Q4) .

9. Procédé selon une quelconque des revendications 1, 3 à 8,
dans lequel, si la consommation de mémoire excède le second seuil prédéterminé, ladite mesure de dissolution de surcharge déterminée comprend les étapes consistant à :
- rejeter toutes les demandes de signalisation de commande (R(CS)) reçues dans ladite première file d'attente d'entrée (Q3), et
- abandonner tous les paquets de données d'utilisateur provenant de ladite seconde file d'attente d'entrée (Q2, Q3, Q4).

10. Procédé selon une quelconque des revendications 1, 3 à 9,
dans lequel, si la charge de processeur excède la limite de charge de processeur prédéterminée, ladite mesure de dissolution de surcharge déterminée comprend les étapes consistant à :
- rejeter un rapport prédéterminé de demandes de signalisation de commande (R(CS)) reçues dans ladite première file d'attente d'entrée (Q1), et
- abandonner lesdits paquets de données d'utilisateur de ladite seconde file d'attente d'entrée (Q2, Q3, Q4).

11. Procédé selon une quelconque des revendications 1, 3 à 10,
dans lequel, si ledit niveau de remplissage des demandes de données d'utilisateur (R(IP)) dans la seconde file d'attente d'entrée (Q2, Q3, Q4) excède le niveau de remplissage de demande de données d'utilisateur prédéterminé, ladite mesure de dissolution de surcharge déterminée comprend l'étape consistant à :
- abandonner lesdites paquets de données d'utilisateur provenant de ladite seconde file d'attente d'entrée (Q2, Q3, Q4).

12. Procédé selon une quelconque des revendications précédentes, comprenant l'étape consistant à :
- dissoudre la situation de surcharge détectée en exécutant au moins une mesure de dissolution de surcharge déterminée.

13. Procédé selon la revendication 12,
dans lequel ladite mesure de dissolution de surcharge est suspendue si ladite situation de surcharge déterminée est dissoute.

14. Elément de noeud de réseau d'un réseau de communication, ledit élément de noeud de réseau étant pourvu de ressources pour traiter des demandes et d'une tâche de protection de surcharge (OPT) afin de protéger lesdites ressources contre une surcharge, lesdites ressources comprenant au moins une file d'attente d'entrée (Q1, ..., Q4) pour les demandes à traiter, un processeur (CPU) pour traiter les demandes et une mémoire (M) pour mémoriser les données relatives au traitement des demandes, dans lequel ladite capacité de traitement du noeud de réseau est limitée, ledit élément de noeud de réseau comprenant un moyen pour mettre en oeuvre les étapes du procédé selon une quelconque des revendications 1 à 13.

15. Elément de noeud de réseau, ledit élément de noeud de réseau comprenant en outre un moyen de gestion de demandes (RH) pour contrôler ladite file d'attente d'entrée (Q1, ..., Q4).

16. Réseau de communication comprenant au moins un élément de noeud de réseau selon la revendication 14 ou 15.

17. Programme informatique, chargeable dans une mémoire interne (M) d'une unité de traitement numérique (CPU), comprenant des portions de code logiciel adaptées afin de commander les étapes selon une quelconque des revendications de procédé précédentes, quand le programme informatique est exécuté sur l'unité de traitement numérique (CPU).

18. Programme informatique selon la revendication 17, dans lequel le programme informatique est mémorisé sur un support lisible par machine, en particulier un support lisible par ordinateur.
